**Europäisches Patentamt**

**European Patent Office**

**Office européen des brevets**

(19)

(11) Publication number : **0 668 572 A2**

# EUROPEAN PATENT APPLICATION

(12)

(21) Application number : **95300964.4**

(22) Date of filing : **15.02.95**

(51) Int. Cl.⁶ : **G06T 17/20**, G06F 17/60

(30) Priority : **16.02.94 JP 19226/94**

(43) Date of publication of application :
**23.08.95 Bulletin 95/34**

(84) Designated Contracting States :
**DE FR GB**

(71) Applicant : **International Business Machines Corporation**
**Old Orchard Road**
**Armonk, N.Y. 10504 (US)**

(72) Inventor : **Shimada, Kenji**
**3-2-11-308 Susukino,**
**Midori-ku**
**Yokohama-shi, Kanagawa-ken (JP)**

(74) Representative : **Moss, Robert Douglas**
**IBM United Kingdom Limited**
**Intellectual Property Department**
**Hursley Park**
**Winchester Hampshire SO21 2JN (GB)**

(54) **Method and system for automatically generating meshes.**

(57)    The present invention provides a system and method for automatically generating meshes on a nonmanifold data model using a physical model.

A nonmanifold data model is prepared, a plurality of bubbles is placed on the vertex and edge of said data model, and Newtonian equations including a viscous term is solved based on interbubble force and bubble mass by numerical analysis to move bubbles. At the point where bubble movement is somewhat stabilized, line segments are generated by connecting the centers of bubbles. Next, bubbles are placed on each closed face of a nonmanifold data model and bubbles are moved based on a dynamic model similar to the above. At the point where bubble movement is somewhat stabilized, triangle elements are generated by connecting the center points of bubbles based on a two-dimensional Delaunay's method. Last, bubbles are placed on the closed face of a nonmanifold data model and bubbles are moved based on a dynamic model similar to the above. At the point where bubble movement is somewhat stabilized, tetrahedron elements are generated by connecting the center points of bubbles based on a three-dimensional Delaunay's method.

FIG. 6

(a) Nonmanifold captured

(b) Vertex node configuration

(c) Edge node configuration

(d) Line element generation

(e) Surface node configuration

(f) Triangle element generation

(g) Volume node configuration and tetrahedron element generation

(h) Mesh

EP 0 668 572 A2

## Field of the invention

The present invention relates to systems and methods for automatic mesh generation for a data model, using data model element division, which methods and systems have applications in fields such as finite element methods, CAD (computer-aided design) systems, and computer graphics.

## Background

To enhance aesthetic and functional characteristics, a variety of complicated free curved surfaces have been used recently in product shapes such as automobiles and electrical household products. In design, these curved surfaces are expressed in a CAD system as a parametric curved surface such as Bezier, B-spline and NURBS. However, when operating performance in a product is analyzed by a finite element method, another shape expression, known as a mesh, is needed. Therefore, in order to connect the design and analysis processes, an automatic conversion method is required to convert a curved surface shape in CAD to a triangle mesh with high efficiency.

The following are so far known as publications in this technical field.

PUPA No. 3-163669 discloses a mesh generation method that is used in a figure analysis and the like in the field of CAD systems. This Application relates particularly to a mesh generation method that performs a Delaunay's division with a triangle element or tetrahedron element by successively adding a point to a two-dimensional or three-dimensional region. A region in a two-dimensional or three-dimensional region is regularly divided in advance into packet elements. When a new mesh point is added, detection of a group of elements that connections are rearranged is made only for an element where in a circumcircle or a circumscribed sphere is registered to a packet element to which that point belongs. In this way, detection of the rearrangement element is made at high speed.

Published Unexamined Patent Application (PUPA) No. 1-286081 discloses a method wherein information on the polygon domain of a multidimensional object is input and processed and a multiplex polygon display of a predicted physical phenomenon is generated according to the result of the process. In the method, the polygon domain is divided into a plurality of first regions which have a straight line or a curved boundary and each of which contacts at least one point with the boundary of the polygon domain. An arbitrary curved part is replaced by at least one straight line connecting both end points of the curved part, and the first regions are adjusted. All sides of the adjusted first regions are surrounded by segments. A pair of adjusted first regions surrounded by a common boundary is grouped into a finite number of classes. According to a rule suitable for each class, the first region is divided into a plurality of second regions. These second regions are used in multiplex polygon display.

Hitherto, the triangle element division problem including what is shown in the aforementioned publications has been investigated and developed mostly in the field of calculation dynamics. In fact, many methods have been proposed for a two-dimensional shape. However, for a three-dimensional shape, study and research have not been sufficient.

Also, conventional methods are limited only to the two- and three-dimensional shape regions and cannot be applied to a nonmanifold shape. It was only recently that a three-dimensional nonmanifold shape was expressed by some CAD systems.

Now, a conventional typical triangle element division method will hereinafter be classified into four groups and described, based on K. Ho-Le, "Finite element mesh generation methods: a review and classification," Computer-Aided Design, Vol. 20, No. 1, 1988.

## Partial Region Division Method

A given region is divided into simple and handy partial regions such as a region having no convex and no hole, and then a triangle element division is made for the respective partial regions. The division of partial regions is per formed by mapping regular lattices with an image function or by adding internal nodes according to a simple rule. In most conventional methods, the division into partial regions has been performed manually and has not been completely automated. Also, no method was available for placing nodes with fidelity on internode distance distributions designated for the respective partial regions.

## Hierarchical Volume Division Method

This is a method that hierarchically subdivides a two-dimensional region with 4 dividing trees and a three-dimensional with 8 dividing trees. In order to express a smooth boundary of regions, a method has been proposed which is expanded so that a partially broken square or cube can be handled as an element in the vicinity of the boundary. The most difficulty associated with this method is to scattering-control the size of an element, depending on the depth of a division. Also, the drawbacks are that the result of a division depends largely upon the arrangement of a shape with respect to the axis of the division, and many greatly distorted elements are generated at the corner and on the surface of a shape that become important in analysis.

## Recursive Division-By-Two Method

Until a shape that can be used as a triangle element is obtained, a region is recursively divided into two parts. Unlike the partial region division method, the region is divided up to the level of an element only by a division into two parts. Although data control of a required shape modeling has been argued many times, basic requirements such as successive control of internode distances and reduction of distortion in an element have not been considered sufficiently.

## Node Connection Method

This is a method wherein nodes are first placed on the boundary and interior of a region and a mesh is then produced by connecting these nodes. Once an aggregation of nodes is given, a mesh whose distortions are few can be generated with the aid of a Delaunay's method. This method has been investigated in the calculation geometry field for many years, and is an effective and stable algorithm for generating a mesh, which is almost a regular triangle or a regular tetrahedron, by connecting points scattered in two- and three-dimensional spaces (see Iri "Calculation Geometry and Geographical Information Processing," Bit Separate Volume, Kyoritsu Publication, 1989). In this method, it is difficult to fill the designated internode distance distribution and to locate the nodes so that an element whose distortions are few can be generated. With this method, it is particularly difficult to handle a three-dimensional space.

In analysis using the finite element method, the inter- node distance, i.e., the side length of a triangle, must be changed over the entire region in accordance with a continuous distribution function, in order to obtain a solution without increasing calculation time and storage space. In this method, it is important to use a fine triangle element in a region wherein the solution to the analysis rapidly changes and to use a large element in other regions. The triangle element includes a tetrahedron element on a space as well as a triangle element on a plane.

It is also important to locate a node accurately on a given trimming curve or a particularly designated point or curve. Also, in order that, in the analysis, a boundary condition is given on these curves, the shape of each curve must be expressed within the mesh as a row of the sides of a triangle.

Also, it is usually desired that the sides of the triangles constituting the mesh be as equal as possible. The reason is that a largely distorted triangle element causes the solution of an analysis to deteriorate.

Further, in an analysis handling a large deformation, the shape of a region to be mesh-divided and the size of a required triangle element tend to gradually change. In this case, it is necessary to perform mesh division repeatedly. Thus it is desired that, making use of the mesh previously made, mesh division is continued without making a new mesh from the beginning. Also, a function of mesh-dividing only a specific partial region locally is also useful in that a model for analysis can be made with high efficiency. However, the techniques disclosed in the aforementioned publications do not always meet such requirements satisfactorily.

Therefore, in order to meet the above requirement, the inventor of this application proposed a bubble-mesh division system as a physical model, in an essay of the inventor, "Automatic Mesh Division by Physical Model," Simulation, Vol. 12, No. 1, March 1993, pp. 11-20. The division system is based on a technique wherein the aforementioned node connection method is used as a background technique, such a physical model as generating an ideal mesh shape is designed, an equation dominating this physical system is constructed, this equation is solved by a numerical analysis, nodes are placed based on the solution, and a mesh is generated by connecting the nodes with a Delaunay's method. In the bubble-mesh division system, the bubble is a spherical particle with a mass, and the diameter is given by a predetermined internode distance. Further, a field of force is defined so that, when two bubbles contact each other, they are in their most stable states. Also, there exists a viscosity resistance proportional to bubble resistance. Supposing such model, in order to perform mesh division for a solid body, vertex bubbles are placed on the vertex of the solid body, and edges bubbles are placed on the edges of the solid body. Likewise, surface bubbles are placed on the surfaces of the solid body and volume bubbles are placed in the interior of the solid body. Next, the multibody problem of a Newtonian equation is solved taking viscosity resistance into ac count, and an appropriate placement of the bubble is deter mined by stopping the solution when the whole system meets predetermined stable conditions. The above essay is based on the inventor's knowledge that a pattern, which is made by locating bubbles most closely so that the spacing and the overlap can be minimized, is similar to a Voronoi's polygon that is dual with a Delaunay's triangle in which distortions are small. The present invention may be implemented as an improvement to the methods described in this essay.

On one hand, a solid modeling system for a nonmanifold boundary expression model was disclosed by the inventor in Patent Specification No. 63-24499 (Published Unexamined Patent Application No. 2-132573). A nonmanifold data model is a data model that can store and express the overlap and boundary of different dimensional solids. In forming meshes that are used in a finite element method to solve the shadow expression in computer graphics for reflecting the overlap of shadows from a plurality of light sources and to solve the structure calculation of a building by a partial differential equation, the nonmanifold data model is effective in expressing a shape as an aggregation of the sum of a one-dimensional solid, a two-dimensional solid, and a three-dimensional solid. However, the aforementioned publication does not disclose automatic mesh division by a physical model, which is applied to the nonmanifold data model.

Required is a system and method for applying an automatic mesh division to a nonmanifold data model.

## Summary of Invention

In a first aspect, the present insertion provides a method of automatic mesh generation for mesh representation of three dimensional non-manifold data models, comprising the following steps:

placing nodes at each of the vertices of a nonmanifold data model;

placing nodes on each of the edges of the data model, in accordance with initial node distribution criteria, and dynamically redistributing said nodes according to a dynamic distribution function such that said nodes are moved towards an equilibrium node distribution having substantially optimum node separation;

responsive to the node distribution reaching a predetermined level of approximation to said equilibrium distribution, connecting the nodes on the edges to form a mesh of line elements;

placing nodes on all closed faces of said data model, in accordance with initial node distribution criteria, and dynamically redistributing said nodes according to said dynamic distribution function;

responsive to the node distribution reaching a predetermined level of approximation to said equilibrium distribution, connecting the nodes on the closed faces to divide the data model into triangle elements;

placing nodes in all closed bodies of said data model, in accordance with initial node distribution criteria, and dynamically redistributing said nodes according to said dynamic distribution function;

responsive to the node distribution reaching a predetermined level of approximation to said equilibrium distribution, connecting the nodes in the closed bodies to divide the data model into tetrahedron elements.

In a second aspect, the invention provides a computerised system for automatic mesh generation for mesh representation of three dimensional non-manifold data models, comprising:

means for placing nodes at each of the vertices of a non-manifold data model;

means for placing nodes on each of the edges of the data model, in accordance with initial node distribution criteria, and for dynamically redistributing said nodes according to a dynamic distribution function such that said nodes are moved towards an equilibrium node distribution having substantially optimum node separation;

means, responsive to the node distribution reaching a predetermined level of approximation to said equilibrium distribution, for connecting the nodes on the edges to form a mesh of line elements;

means for placing nodes on all closed faces of said data model, in accordance with initial node distribution criteria, and for dynamically redistributing said nodes according to said dynamic distribution function;

means, responsive to the node distribution reaching a predetermined level of approximation to said equilibrium distribution, for connecting the nodes on the closed faces to divide the data model into triangle elements;

means for placing nodes in all closed bodies of said data model, in accordance with initial node distribution criteria, and for dynamically redistributing said nodes according to said dynamic distribution function;

means, responsive to the node distribution reaching a predetermined level of approximation to said equilibrium distribution, for connecting the nodes in the closed bodies to divide the data model into tetrahedron elements.

The present invention preferably provides a system and method that perform optimum triangle element division automatically by locating a plurality of bubbles on a nonmanifold data model, solving a dynamic equation based on attractive and repulsive forces defined between the plurality of bubbles, and connecting the center points of the bubbles.

For a nonmanifold data model prepared in advance, an optimum number of nodes is generated on optimum positions in accordance with a preferred embodiment of the present invention by steps 1 to 4, below. Also, as shown in step 5, this node generation method is applied to an edge, a surface, and a volume, in this sequence, then triangle elements are connected. As a consequence, the automatic triangle element division of a three-dimensional nonmanifold model is obtained.

## Step 1 Replacement of a node with a bubble having a diameter

In order to locate nodes so that a triangle element, which is almost a regular triangle or a regular tetrahedron, can be obtained, each node is replaced with a sphere (hereinafter referred to as a bubble) having a diameter of d.

## Step 2 Definition of an inter-bubble force

A field of forces similar to intermolecular forces is defined as a function of interbubble distances. When two bubbles are in contact with each other, they are stable. If the bubbles approach each other from this distance, a repulsive force will be exerted between them. If the bubbles moves away from each other from this distance, an attractive force will be exerted between them. An optimum interbubble force is defined by, for example, a portion of a three- dimensional curve.

Step 3 Calculation of the equilibrium position of inter- bubble forces by a dynamic simulation

The center point of the bubble is given the inter-bubble force defined in step 2, a mass, and viscosity resistance proportional to the velocity of the bubble, then a Newtonian equation of motion is used. This equation of motion is solved from an initial position by a numeral integral method such as a Runge-Kutta method. Since the bubble position approaches the equilibrium state of a force as time elapses, a final solution is obtained by stopping the numerical integral when the bubble position approached equilibrium sufficiently. However, bubbles on edges and on surfaces must be moved so that they do not go out of the edges and surfaces.

Step 4 Control of the number of bubbles

By calculating the degree of overlap between bubbles during the dynamic simulation in step 3, bubbles are destroyed where the density of the bubble is too large and the number of bubbles is reduced. Bubbles are divided where the density of bubble is too small and the number of bubbles is increased. With this mechanism, an appropriate number of bubbles can be supplied to a region without excess and deficiency.

Step 5 Arrangement of bubbles on a nonmanifold shape and triangle element division

With bubble generation methods such as those in steps 1-4, the triangle element division of the three-dimensional nonmanifold shape can be performed by the following steps:
  1. Place bubbles on all vertexes.
  2. Place bubbles most closely on all edges.
  3. Divide into line elements by connecting the center points of bubbles on edges.
  4. Place bubbles most closely on all closed surfaces.
  5. Divide into triangle elements by connecting the center points of bubbles on closed surfaces by a Delaunay's method.
  6. Place bubbles most closely in all closed bodies.
  7. Divide into tetrahedron elements by connecting the center points of bubbles in closed bodies by a Delaunay's method.

Note that the sequence of bubble placement is important for the nonmanifold model. It is also important that bubbles are placed without discriminating between the normal edge of the nonmanifold model and the edge as a boundary between different dimensional objects.

Preferred embodiments of the present invention will now be described in more detail, by way of example, with reference to the accompanying drawings in which:

Figure 1 is a block diagrams showing the components of a system according to an embodiment of the present invention;

Figure 2 is a flowchart showing the steps of a method according to an embodiment of the present invention;

Figure 3 is a flowchart showing the steps performed by the edge node location means;

Figure 4 is a flowchart showing the steps performed by the surface node location means;

Figure 5 is a flowchart showing the steps performed by the volume node location means;

Figure 6 shows how nonmanifold shape data is divided into elements;

Figure 7 is a graph used to explain an interbubble force defined in the present invention;

Figure 8 is a diagram showing an stable position between two bubbles;

Figure 9 is a diagram showing the placement of a bubble on the edge;

Figure 10 is a schematic view showing how a bubble departed from the edge is returned;

Figure 11 is a diagram showing the overlap of bubbles on the edge;

Figure 12 is a diagram used to explain how the degree of estrangement of the bubble on the edge is calculated;

Figure 13 is a diagram showing bubbles placed in a curved surface;

Figure 14 is a diagram showing the overlap of bubbles on a curved surface;

Figure 15 is a diagram used to explain how the degree of estrangement of the bubble on the curved surface is calculated;

Figure 16 is a diagram showing how bubbles on the flat surface are optimally placed; and

Figure 17 is a diagram showing how bubbles are placed in a volume region.

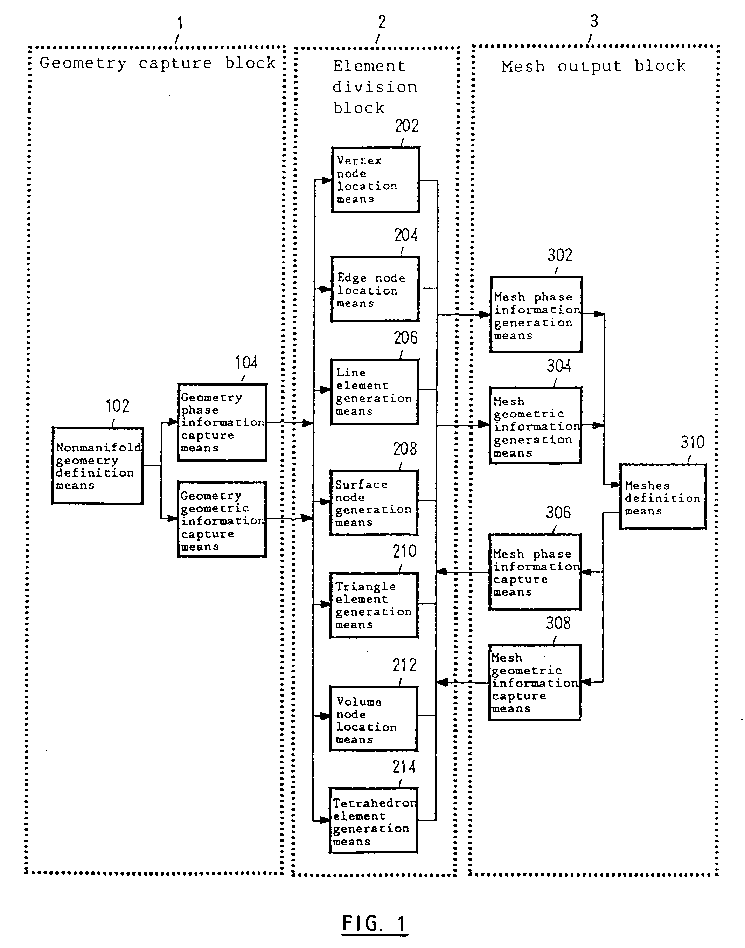

Figure 1 is a block diagram showing processing modules for implementing an automatic triangle element division system of the present invention. In this embodiment, the block of each processing module shown in Figure 1 is an individual program, routine, or function that was made in C language on a workstation operated under AIX (trademark: International Business Machines Corporation). However, these individual processing modules may be implemented by discrete devices. Also, under a distributed processing circumstance wherein a plurality of workstations are connected with each other via LAN, separate processing modules may be loaded into individual workstations and distributed parallel processing may be performed.

Now, in Figure 1, a geometry capture block 1 defines an input geometry to be mesh-divided, and provides information necessary when dividing elements. The geometry capture block 1 is constituted by a nonmanifold geometry definition means 102 for defining the input a geometry to be mesh-divided, a geometry phase information capture means 104 for capturing the phase elements of the geometry such as vertexes, edges, surfaces, and volumes, and a geometry geometric-information capture means 106 for capturing geometric information such as the location and the geometry of phase elements.

A element division block 2 obtains the necessary phase and geometric information successively from the geometry capture block 1, then locates mesh nodes and generates mesh elements, and finally outputs the produced mesh elements successively to a mesh output block 3.

More particularly, the element division block 2 comprises a vertex node location means 202 for locating bubbles on the nodes of vertexes based on information from the geometry capture block 1, an edge node location means 204 for locating bubbles on edges based on information from the geometry capture block 1, and a line segment generation means 206 for generating line segments from placed vertexes and edges. The element division block 2 further comprises a surface node generation means 208 for locating bubbles on surface nodes based on information from the geometry capture block 1, a triangle element generation means 210 for generating triangle elements from placed surface nodes by a two-dimensional Delaunay's method, a volume node location means 212 for locating bubbles on volume nodes based on information from the geometry capture block 1, and a tetrahedron element generation means 214 for generating tetrahedron elements from placed volume nodes by a three-dimensional Delaunay's method. Particularly, in order to perform triangle division of a nonmanifold data structure properly into triangle elements, the means 202 to 214 in the element division block 2 must operate successively from the top to the bottom in Figure 1.

The mesh output block 3 has stored therein the nodes output from the element division block 2, and phase information and geometric information on mesh elements, and feeds values, which have already been held, back to the processing of the element division block 2 as needed. Therefore, the mesh output block 3 is constituted by a mesh definition means 310 for storing nodes and phase information and geometric information on mesh elements, a mesh phase information generation means 302 for writing phase information in the mesh definition means 310, a mesh geometric information generation means 304 for writing geometric information in the mesh definition means 310, a mesh phase information generation mean 306 for feeding the phase information from the mesh definition means 310 back to the element division block 2, and a mesh geometric information generation mean 308 for feeding geometric information from the mesh definition means 310 back to the element division block 2.

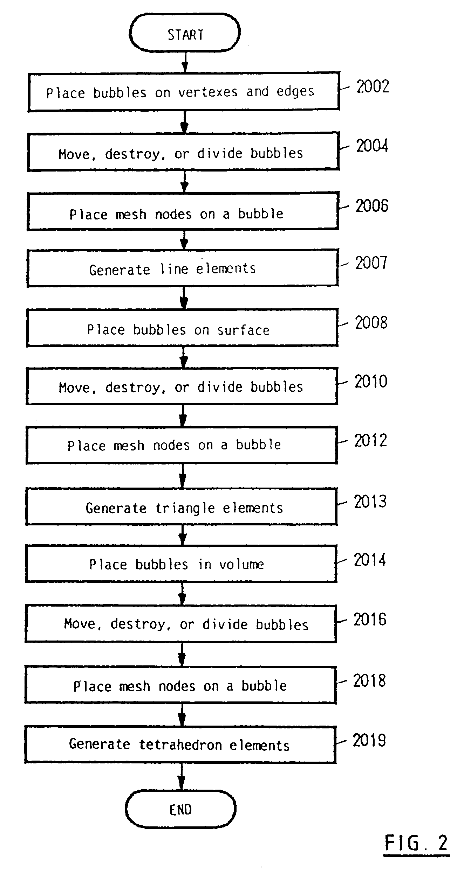

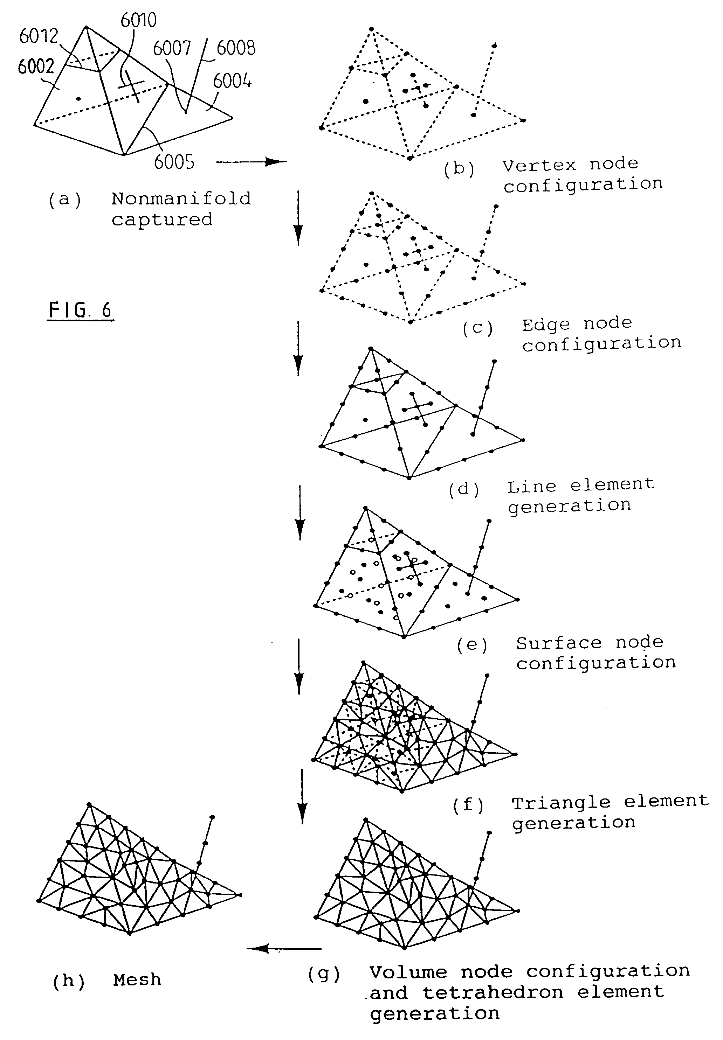

Next, the processing steps of the present invention will be described in conjunction with Figures 2 and 6. Figure 2 is a flowchart showing the essential steps done by the present invention. It is assumed in Figure 2 that a nonmanifold geometry such as that shown in Figure 6 (a) has been given by the geometry capture block 1. It is noted in Figure 6 (a) that a triangle 6004 of a two-dimensional figure contacts a solid body 6002 of a tetrahedron of a three- dimensional figure through an edge 6005 as a boundary line and that a straight line 6008 of a one-dimensional figure contacts the triangle 6004 at a point 6007. A complex figure comprising different dimensional objects, such as that shown in Figure 6 (a), is difficult or actually impossible to express unless a nonmanifold data structure is used. Also, a "x"-shaped figure of a one-dimensional figure is attached to one side of the solid body 6002. The solid body 6002 further has therein a boundary line 6012 by which the body itself is divided. Holding these geometries is also one of the characteristics of the nonmanifold data structure.

In step 2002 shown in Figure 2, bubbles are first placed on the vertexes on the edges, on the opposite end points and the internal points, and on the edges by the vertex node location means 202 and the edge node location means 204, as shown in Figures 6 (b) and 6 (c). At this point, note that, for the three-dimensional nonmanifold data structure, the point can be a boundary on all edges, the surface, and the volume; the edge can be a boundary in both of the surface and the volume; and the surface can be a boundary in the volume. The "boundary" will hereinafter be intended to contain these meanings. For example, in the nonmanifold data structure, an isolated point in the volume can exist independently and, in that case, the point itself is a boundary between the point and the surrounding volume.

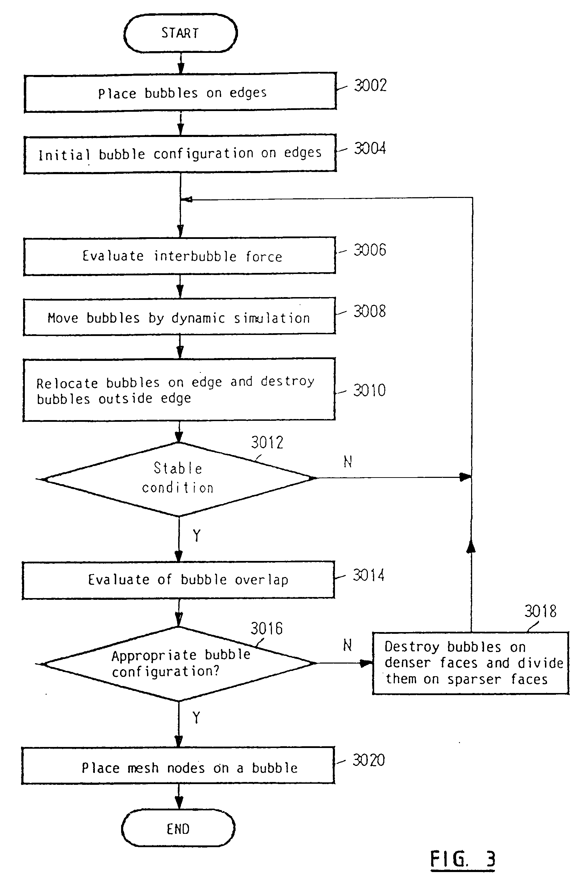

In step 2004 of Figure 2, bubbles are moved by a dynamic technique, which is described on an essay of the inventor, "Automatic Mesh Division by Physical Model," Simulation, Vol. 12, No. 1, March 1993, pp. 11-20, and bubbles are destroyed and divided when necessary. In step 2006, mesh nodes are placed on placed bubbles. In step 2007, the line element generation means 206 generates line elements so that center points of bubbles are connected. Note that steps 2002 to 2007 will be described in detail in relation to the flowchart shown in Figure 3.

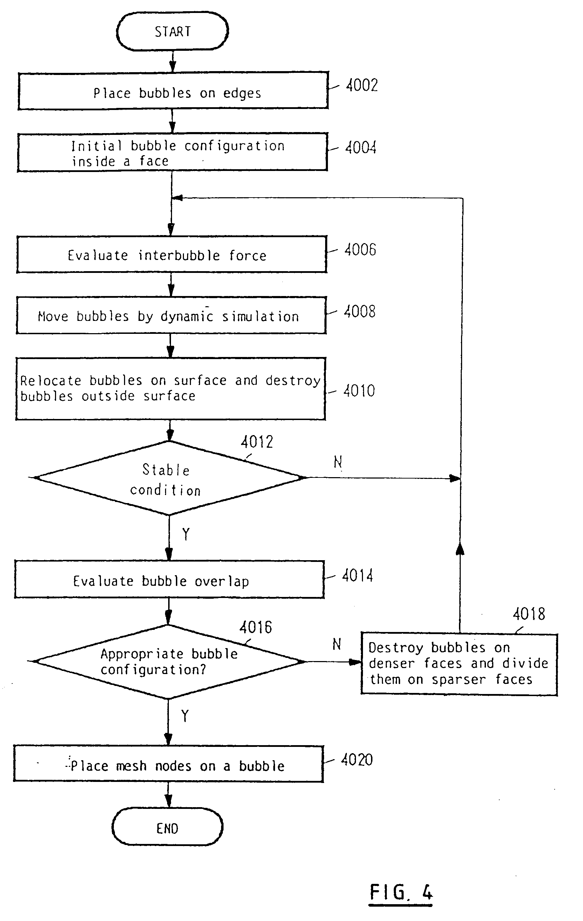

In step 2008, bubbles are placed on the boundary of the surface and on the surface by the surface node location means 208 after line elements have been generated by the line element generation means 206 of Figure 1 (Figure 6 (d)). In step 2010, bubbles are moved by the same technique as that in step 2004 and are destroyed and divided when necessary. In step 2012, mesh nodes are placed on placed bubbles (Figure 6 (e)). Next, in step 2013, by the triangle element generation means 210, center points of bubbles are connected using a two-dimensional Delaunay's method so that triangle elements are generated (Figure 6 (f)). At this point, paying attention to the nonmanifold data structure, as in the case of the "x" configuration 6010, a one-dimensional line is buried in a two-dimensional surface. Therefore, in applying the two-dimensional Delaunay's method, triangle elements must be generated so as not to intersect with a one-dimensional line such as the buried line. Steps 2008 to 2013 will be described in detail in relation to the flowchart shown in Figure 4.

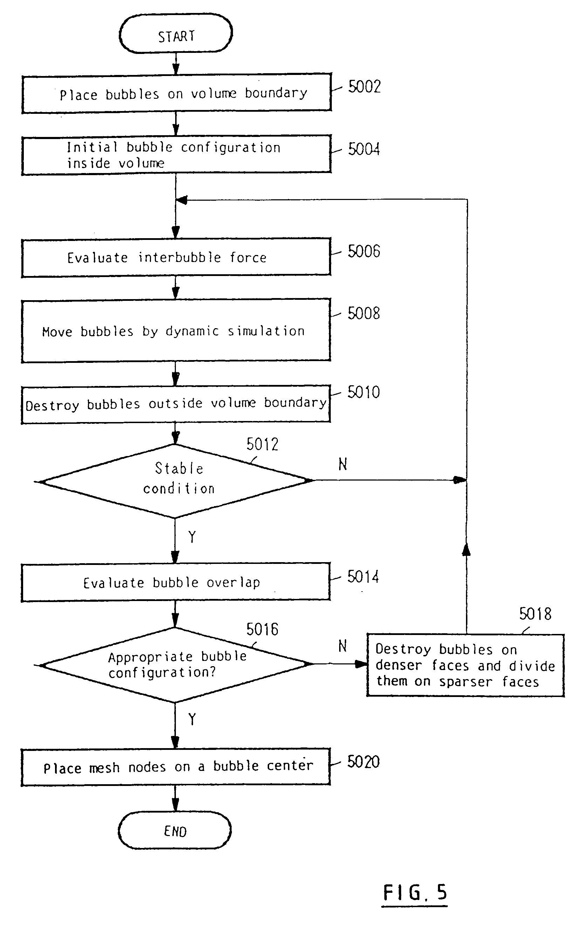

In step 2014, bubbles are placed on the boundary of the volume and in the interior of the volume by the volume node location means 212, after triangle elements have been generated by the triangle element generation means 210 of Figure 1 (Figure 6 (f)). In step 2016, bubbles are moved by the same technique as in step 2004 and are destroyed and divided when necessary. In step 2018, mesh nodes are placed on placed bubbles. Next, in step 2019, by the tetrahedron element generation means 214, tetrahedron elements are generated for mesh nodes in the volume, using a three-dimensional Delaunay's method (Figure 6(g)). As in the previous case, in applying the three-dimensional Delaunay's method to the nonmanifold model, tetrahedron elements must be generated so as not to intersect with lower dimensional lines or surfaces. Steps 2014 to 2019 will be described in detail in relation to the flowchart shown in Figure 5.

Thus, finally, the mesh shown in Figure 6 (h) is produced.

Mesh generation according to the present invention will hereinafter be described in detail in conjunction with Figures 3-8.

Referring to Figure 3, a flowchart shows the essential steps in which bubbles are placed on the vertexes of the edges and on the edges, bubbles are moved according to a kinetic model, and bubbles are destroyed and divided when necessary.

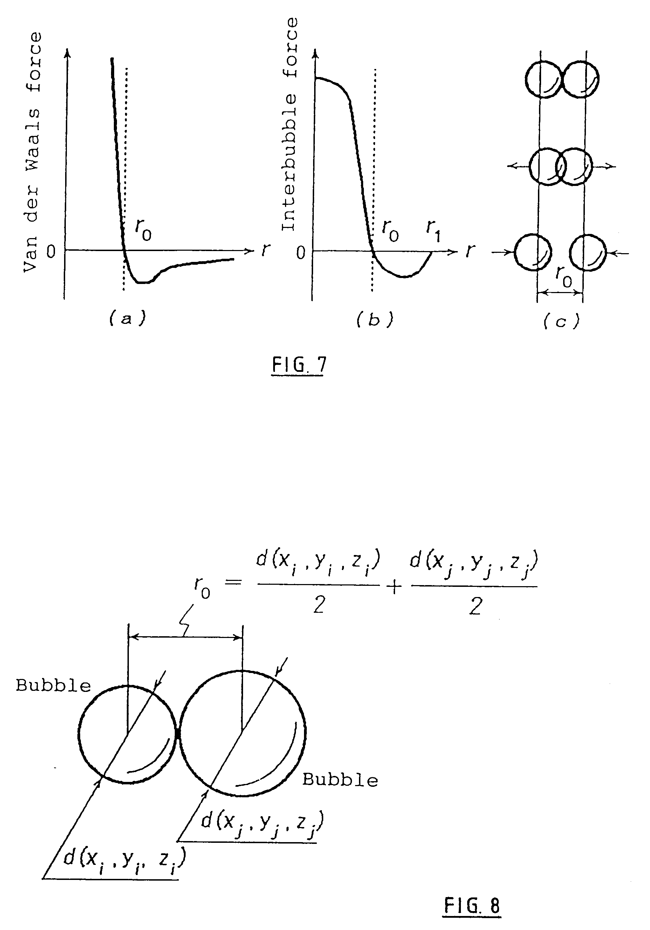

First, the bubble used in the present invention will be described. The bubble is an imaginary sphere with a diameter of d and a mass of m. This diameter, d, is not a constant but is given as a function of $d \equiv d(x, y, z)$, based on the coordinates of the volume, by an application using the mesh. For example, in the case of mesh generation for CAD data for a building, the value of d becomes small at a position wherein stress is large so that a relatively fine mesh is generated. However, the bubble is not assumed to be a rigid body with a diameter of d, but the diameter d is rather used as an index representing a degree of bubble approach and an interbubble force. Therefore, as shown in Figure 7 (c), two bubbles can move away from each other, contacted at one point with each other, and overlapped with each other.

Also, bubbles are modeled so that, between them, they are subjected to attractive and repulsive forces which are modeled on van der Waals forces as intermolecular forces. As shown in Figure 7 (a), the van der Waals force is a attractive force if $r_0 < r$, and approaches 0 as r is increased. If $0 < r < r_0$, the van der Waals force is a repulsive force which is rapidly increased as r approaches 0. Based on this van der Waals force, the interbubble force used in the present invention is defined so that it represents an attractive force when $r_0 < r < r_1$ and 0 when $r = r_0$. If $r < r_0$, the interbubble force is defined so as to represent a repulsive force that is gradually increased and finally reaches a finite value. This $r_0$ is defined by the equation shown in Figure 8 and represents a stable distance between two bubbles. The reason why the interbubble force is defined to be 0 if $r_1 < r$ is that, in the dynamic computation to be described later, the influence from remote bubbles is neglected and the amount of computation is reduced.

In the embodiment of the present invention, the interbubble force f(r) is defined in terms of a cubic equation such as Equation 1. In Equation 1, $r_1 = 1.5 r_0$. The present invention is not limited to the definition of the interbubble force but, in this embodiment, Equation 1 does not contain a term related to bubble mass. Therefore, the interbubble force is determined only by the interbubble distance and bubble diameter.

That is, the bubble mass is used only as an inertia mass in the Newtonian equation of motion. In other words, the movement of the bubble becomes slower as the bubble mass becomes larger.

$$f(r) = ar^3 + br^2 + cr + d, 0 \leq r \leq 1.5r_0 \quad [\text{Equation 1}]$$

$$f(r) = 0, 1.5r_0 < r$$

$$f(r_0) = 0, f(1.5r_0) = 0, f'(0) = 0, f'(1.5r_0) = -k_0$$

The definition of the interbubble force f(r) is not limited to these equations. Of course, those skilled in the art can produce a variety of equations. However, it is necessary that the interbubble force f(r) meet at least the following conditions:

(1) If r is sufficiently large, f(r) is substantially 0. This is for the purpose of making it possible to neglect the influence from remote bubbles.

(2) If r is reduced to a certain degree, the interbubble force represents an attractive force. This is for the purpose of causing separately existing bubbles to move toward each other.

(3) If r is further reduced, the interbubble force represents a repulsive force. This is for holding the interbubble distance to a certain distance, when bubbles are condensed. In fact, if only an attractive force exists, bubbles will locally converge at one point and no mesh will be formed.

(4) Even if r became as small as 0, the repulsive force does not exceed a certain value. This is for holding stability in bubbles. For example, if the repulsive force is rapidly increased as r becomes smaller, as in the case of van der Waals forces, approaching bubbles repel each other with a strong repulsive force, so it is difficult to hold them in stable positions.

Returning to Figure 3, bubbles are first placed on the vertexes on the edges in step 3002 by the vertex node location means 202 shown in Figure 1. At this point, for the nonmanifold data structure, the "edge" used in the embodiment is intended to include a one-dimensional figure such as figure 6010 in Figure 6 (a), in addition to an edge as a boundary between surfaces.

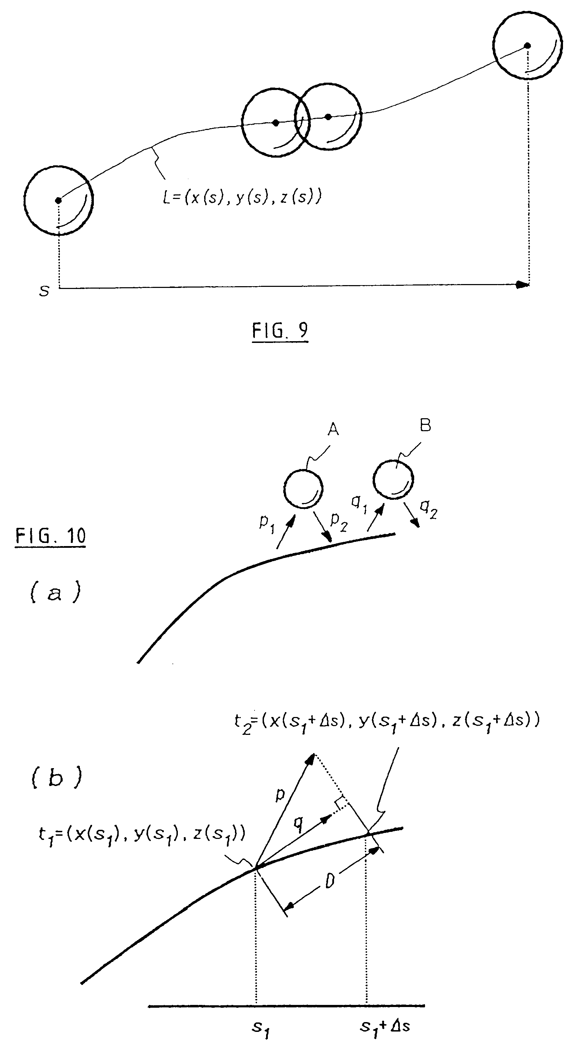

Next, step 3004 for locating a plurality of bubbles on edges with the aid of the edge node location means 204 will be described in conjunction with Figure 9.

In Figure 9, an edge on which the bubble is placed is not always a straight line and is normally a curve expressed by a function of $L = (x(s), y(s), z(s))$ where s is a parameter. Assume that the parameter s is within a range of [0, 1]. Values a and b as in a relationship of $[a, b] \subset$ are used as subtraction number, and points a and b are respectively projected on an actual edge by the above function L. A diameter $d(x, y, z)$ is calculated based on the coordinates $(x, y, z)$ of the projected point, and a bubble having a diameter of the calculated value is placed on the projected point. In this way, two bubbles are placed on the two points a and b. Once such procedure (procedure 1) is prepared, a bubble can be placed on a vertex by applying procedure 1 to (1, 0). Once a procedure 2 for recursively applying procedure 1 to two halves of a segment is prepared, the placement of bubbles over an entire edge can be performed by applying procedure 2.

Next, if the stop condition of procedure 1 is that all located bubbles are adjacent to or overlap each other, bubbles will be arranged over the entire region of given edges, without spaces between bubbles.

However, in general, where bubbles were simply placed as described above is not optimum. The dynamic simulation for obtaining an optimum arrangement of bubbles will be described starting with step 3006 and subsequent steps:

"Dynamic simulation" comes from the fact that the bubble position is varied with time by solving a Newtonian equation which is a common differential equation and wherein each bubble is considered to be a particle with a certain mass (it is assumed the bubble does not have a moment of inertia), only a transfer motion is considered, and the above defined inter-

bubble force and viscosity are considered. If the number of located bubbles is n, the Newtonian equation is given by Equation 2.

As will be seen from Equation 2, the bubble is placed on a one-dimensional edge at early stages, but a three-dimensional space is supposed for Equation 2. For this reason, the bubble moves away from the edge, as Equation 2 is solved. There fore, step 3010 is to be performed in order to overcome this problem, as will be described hereinafter.

$$m_i \frac{d^2 x_i(t)}{dt^2} + c_i \frac{dx_i(t)}{dt} = f_{xi}(t), i = 1..n$$

$$m_i \frac{d^2 y_i(t)}{dt^2} + c_i \frac{dy_i(t)}{dt} = f_{yi}(t), i = 1..n \quad \text{[Equation 2]}$$

$$m_i \frac{d^2 Z_i(t)}{dt^2} + c_i \frac{dz_i(t)}{dt} = f_{zi}(t), i = 1..n$$

In Equation 2, $x_i$ is the x coordinate of the i-th bubble, $m_i$ is the mass of the i-th bubble, and a first-order differential term is a term including a viscosity coefficient $c_i$ and taking a viscosity into account. In one embodiment, the mass $m_i$ of all bubbles is set to an equal value. However, in some cases, the mass $m_i$ is set to a value proportional to the diameter or volume of the bubble. The same rule will apply for $y_i$ and $z_i$. The viscosity coefficient $c_i$ is expressed so that it can take a different value based on individual bubbles but, in many cases, the viscosity coefficient can be considered to be a constant value c. According to an experiment of the inventor, if the viscosity term is omitted, the oscillation of the bubble remains without being attenuated, so the bubble never reaches a stable state. For the i-th bubble at a time t, the function $f_{xi}(t)$ is the sum of x-axis components of attractive and repulsive forces from neighboring bubbles. Likewise, the function $f_{yi}(t)$ is the sum of y-axis components of attractive and repulsive forces from neighboring bubbles, and function $f_{zi}(t)$ is the sum of z-axis components of attractive and repulsive forces from neighboring bubbles. As will be seen from Equation 1, since the interbubble force is defined as 0 if $r > r_1$, only the influence from relatively nearby bubbles can be considered. Also, in Equation 2, the mass and viscosity coefficient are expressed so that their values are different for every bubble but, in many cases, they can be set to a constant value independent on the individual values. This corresponds to the processing in step 3006.

Since, in general, the equation of motion for a dynamic system of a multibody cannot be solved exactly, coordinate values of individual bubbles are calculated by increasing the time t by a slight value, by a known numerical analysis method of a normal differential equation such as a Runge-Kutta method. As the numerical analysis method of differential equation, the present invention is not limited to the Runge-Kutta method, but an arbitrary method such as Adams' method may be used (i.e., Haruo Shunouchi "Numerical Calculation," Mathematics for Science and Engineering 15, Science Sha, September 1978). This corresponds to the processing in step 3008.

If bubbles are moved as described above, they are not always restricted to edges. Therefore, as individual bubbles are moved based on the equation of motion, it is possible for a bubble to leave an edge (arrow p1 and bubble A, Fig. 10 (a)). In such a case, as one method in step 3010, the bubble A is moved in the normal direction p2 to the edge and returned to the edge. For the equation of motion, the coordinate value of a specific bubble is forcibly offset, and calculation by the Runge-Kutta method is started again using, as initial values, a coordinate value and velocity of the bubble system at that time. However, if the bubble B in Figure 10 (b) moved in the direction q1 is returned in a normal direction q2, the bubble B will be no longer on the original edge. In such a case, the bubble B is destroyed. This corresponds to step 3010.

In step 3010, in another method, a tangential vector q (q is a three-dimensional vector since a motion in three-dimensional space is now being considered) is calculated at a spot on the wedge from which the bubble departs (in Fig. 10(b), $t_1$, $t_1 = (x(s_1)$, $y(s_1)$, $z(s_1))$, and p·q is then calculated. If this inner product p·q is divided by the length of q, $|q|$, then there will be obtained a value representing almost a distance D from $t_1$ to a new bubble position along the wedge. If $\Delta s$ is a very small value, the following Equation 3 will be given.

$$\Delta L/\Delta s \doteqdot |q| \quad \text{[Equation 3]}$$

Since the distance D can be considered a value equivalent to $\Delta L$,

$$\Delta s = D/|q| \quad \text{[Equation 4]}$$

That is,

$$\Delta s = p·q/|q|^2$$

Therefore, with $\Delta s$ such as this, the spot on the edge that the bubble is returned to becomes $t_2 = (x(s_1 + \Delta s), y(s_1 + \Delta s), z(s_1 + \Delta s))$.

Next, in step 3012, it is determined whether the bubble has a stable condition. This determination, for example, will be made as follows: That is, in the Runge-Kutta method, a difference between individual coordinate values is calculated each step. The same rule will apply for other numerical analyses of differential equations. In step 3012, a maximum value is obtained among absolute values of differences in individual coordinate values and, if the maximum value of the difference is less than a predetermined value, it is determined that the bubble has a stable condition. If "No," step 3012 returns immediately to step 3006.

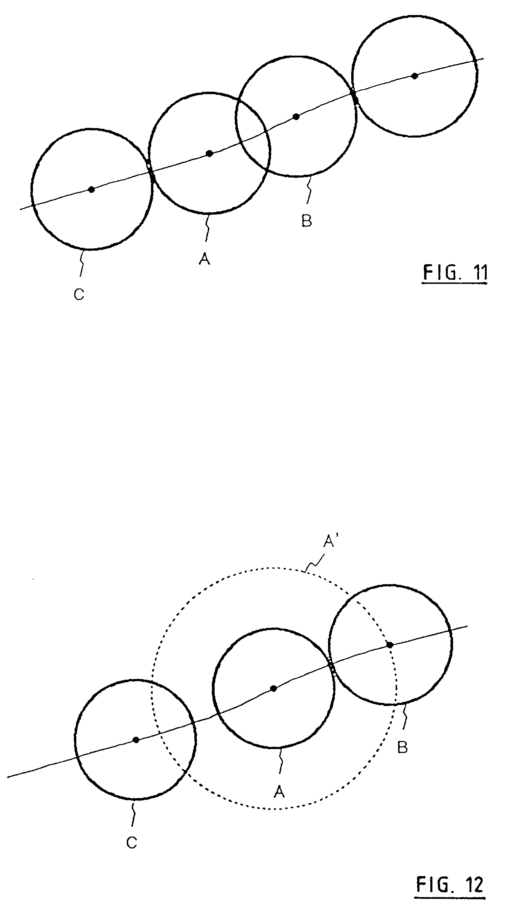

In step 3014, the degree of overlap of each bubble is calculated and evaluated. The calculation method will be described in conjunction with Figure 11. If it is assumed that a bubble A is a reference, the bubble A and a bubble C do not overlap each other completely, so the degree of overlap between the bubbles A and C is 0%. The bubble B overlaps with the bubble A to the extent of half the radius of the bubble A, so the degree of overlap between the bubbles A and B is 50%. Therefore, the bubble A has a degree of overlap of 50% = 0 + 50. With such index, the degree of overlap of a bubble can be detected.

Further, the degree of estrangement of a bubble is determined by to what extent neighboring bubbles B and C enter an imaginary sphere A' having a radius two times the radius of a bubble A, as shown in Figure 12. For example, in the case of Figure 12, the entire radius of the bubble B overlaps with the bubble A', so the overlap of B with respect to A' is 100%. Likewise, the overlap of C with respect to A' is 75%. Therefore, it is defined that the degree of estrangement in the case of Figure 12 is 100 + 75 = 175%.

The degrees of overlap and estrangement are calculated in step 3014 for each bubble. In step 3016, for each bubble it is determined whether the degree of overlap is less than a predetermined threshold value and the degree of estrangement is more than another threshold value. If "Yes," this means that appropriate bubble placement has been achieved at the position of an arbitrary bubble, and step 3016 goes to step 3020, wherein a mesh node is placed on the center of each bubble. If "No," step 3016 goes to step 3018. In step 3018, if the degree of overlap of a specific bubble is more than the above predetermined threshold value (that is, the bubble is in an overpopulated part), the bubble is destroyed. The threshold value for determining whether a bubble is in an overpopulated part, for example, is 100%. If, however, the degree of estrangement of a specific bubble is less than another thresh old value (that is, the bubble is in a depopulated part), the bubble is divided. That is, a new bubble is placed in the vicinity of the bubble determined to be in a depopulated part. After the bubble has been destroyed or divided, step 3018 returns to step 3006 to enter a new cycle of the Runge-Kutta method.

Figure 4 shows a flowchart of steps wherein bubbles are placed on vertexes and edges of a surface and on the surface, bubbles are moved based on a dynamic model, and bubbles are destroyed or divided when necessary. Steps in Figure 4 are done after steps in Figure 3 have been completed. Note that, in the nonmanifold data structure, the surface used herein includes a two-dimensional region buried in the solid such as the surface 6012 of Figure 6, in addition to a surface as a boundary between solids.

In Figure 4, as in the case of steps in Figure 3, bubbles are placed on vertexes and edges of a surface in step 4002. Note that, if steps in the flowchart in Figure 4 are done after steps in the flowchart in Figure 3, step 4002 will be omitted because it has been completed.

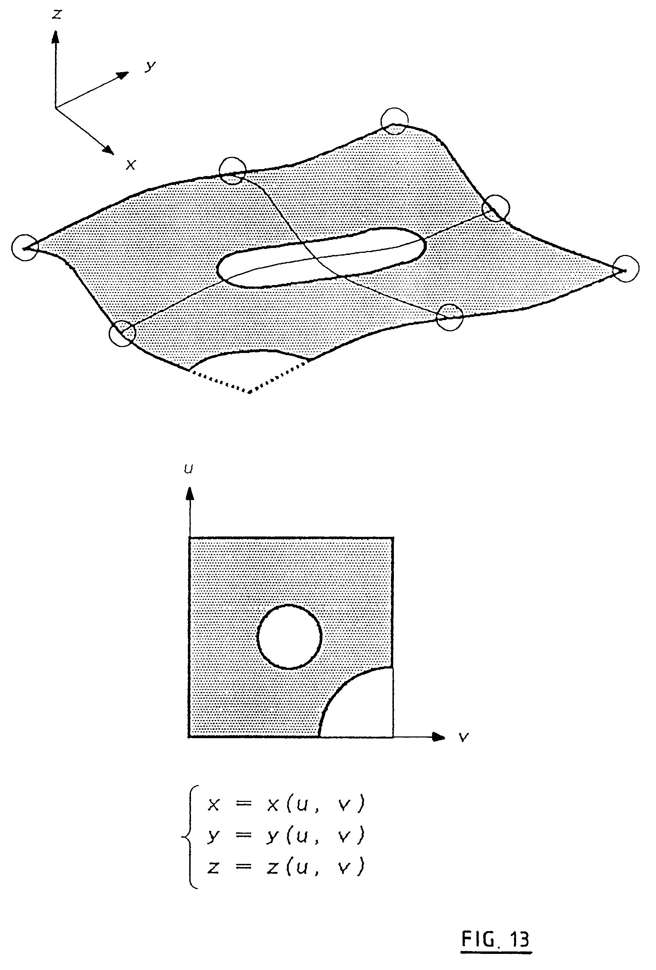

Next, in relation to step 4004, a method of placing a plurality of bubbles on the edge by the surface node generation means 208 of Figure 1 will be described in conjunction with Figure 13.

In Figure 13, a surface on which bubbles are placed is not limited to a flat surface, but generally it is a curved surface expressed by x = x(u, v), y = y(u, v), and z = z(u, v). Assume that parameters u and v are within a range of [0, 1]. Four vertexes of a rectangular region on a flat surface of [0, 1] x [0, 1] are projected on the aforementioned (x, y, z). If projected points are within the surface region, a step of placing a bubble with a diameter of d(x, y, z) is prepared for each projected point. The surface of [0, 1] x [0, 1] is divided into four small regions, and this step is applied to each of the four small regions. Each of the four small regions is further divided into four smaller regions and this step is applied recursively. If, in each recursive application of this step, the processing returns when all placed bubble contact or intersect each other, a given surface will be buried entirely in bubbles.

In order to place bubbles on the whole of a curved surface in connection with the aforementioned rectangular region [0, 1]x[0, 1], the curved surface must be a shape that is phase-geometrically identical in phase with a cube. For example, if, as shown in Figure 13, the curved surface is partially trimmed or holed, it is necessary when placing a bubble, to determine if the bubble, is inside or outside the surface region. The bubble is placed only if it is inside the surface region.

Steps 4006 to 4018 are substantially identical to the steps 3006 to 3018 in Figure 3, but the following should be noted:

Bubbles placed optimally on vertexes and on edges (or, generically on the boundaries of a surface) by step 4002 (or the step in the flowchart in Figure 3) are handled as unmovable in the calculation of an equation of motion for a bubble inside a surface. The bubble inside a surface exerts attractive and repulsive forces, based on the force defined hereinabove, and appears only on the right side of the equation of motion and does not appear in the differential terms on the left side of the equation.

In step 4010, it is determined whether the bubble is moved away from the surface, not the edge. If the bubble is moved away from the surface, the bubble is returned, for example, in the normal direction of the surface. Alternatively, the method in Figure 10(b) is used secondarily to calculate the amount of movement $\Delta u$ in the direction of x and the amount of movement $\Delta v$ in the direction of y, then a position to which the bubble is returned is determined.

The determination of a stable condition by step 4012 may be made in the same way as in step 3012.

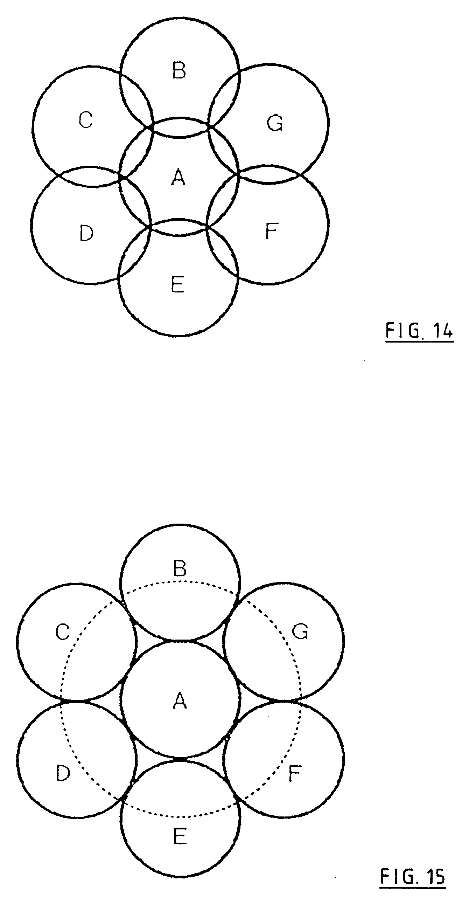

The calculation of the degree of overlap of a bubble in step 4014 is slightly different from the case of the wedge because the bubble is two-dimensionally adjacent and will hereinafter be described in conjunction with Figure 14.

In Figure 14, it is assumed that a bubble A is a reference and 6 bubbles, B, C, D, E, F, and G, are placed around the reference bubble A. When the 6 bubbles overlap one another to the extend of half their radius, it is determined that the degree of overlap is 5 x 6 = 300%. This 300% is an example of a threshold for destroying a bubble in step 4018.

Also, the degree of estrangement will be described in con junction with Figure 15. In Figure 15, it is assumed that a bubble A is a reference and 6 bubbles, B, C, D, E, F, and G, are placed so as to contact the reference bubble A without overlapping with the bubble A. If an imaginary sphere having a diameter two times the diameter of the bubble A is drawn, the lengths of the radii of bubbles B, C, D, E, F, and G divided by the length of the radius of the bubble A will be 600%. This 600% is used as a lower limit of the degree of estrangement. If the degree of estrangement is less than this value, a new bubble is placed (or divided) in step 4018, as described hereinbefore.

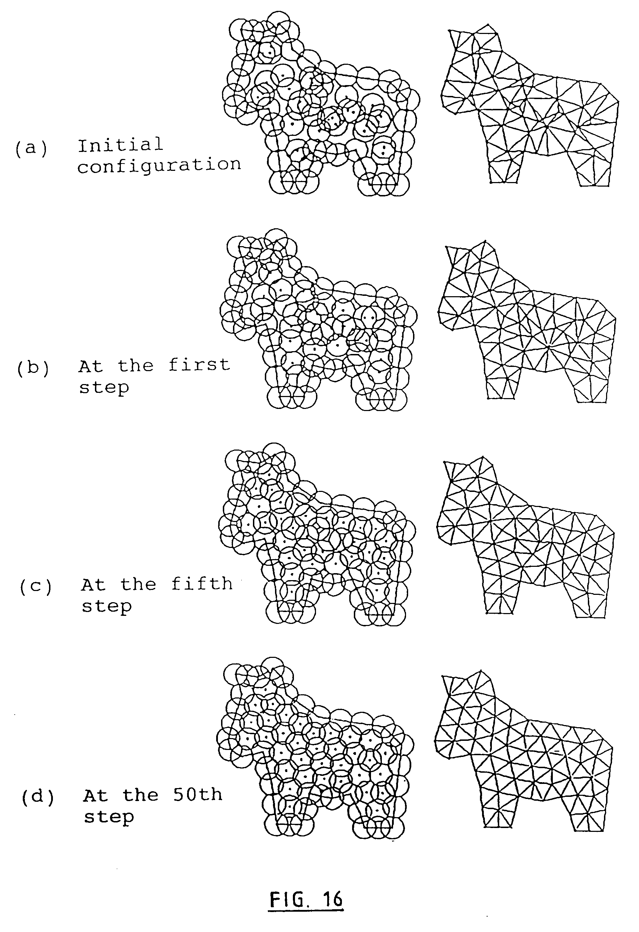

In step 4016, it is determined whether the bubble is placed appropriately from the degree of overlap and degree of estrangement of that bubble. If "No," the bubble in the overpopulated part is destroyed and the bubble of the depopulated part is divided in step 4018. If a new cycle of the Runge-Kutta method is repeated and it is determined that the bubble is placed appropriately, a mesh node is placed on the bubble position in step 4020. Figure 16 shows that, in a specific surface region, the bubble is placed gradually into an optimum position (that is, the position of point for forming the triangle element) by repeating the Runge-Kutta calculation. The left column in Figure 16 shows the placement of bubbles and the right column shows triangle elements formed by the Delaunay method. Figure 16 (a) shows an initial placement of the bubbles, Figure 16 (b) shows a state wherein the Runge-Kutta calculation cycle is done one time, and Figure 16 (c) shows a state wherein the Runge-Kutta calculation cycle is done 5 times. Figure 16 (d) shows a state wherein the Runge-Kutta calculation cycle is done 50 times.

Figure 5 shows a flowchart wherein bubbles are placed on boundaries of a volume and in the interior of the volume, bubbles are moved based on a dynamic model, and bubbles are destroyed or divided when necessary. Steps in Figure 5 are done after the steps in Figures 3 and 4 have been completed.

In Figure 5, in the same steps as those in the flowchart in Figure 4, bubbles are placed optimally on vertexes and edges of the surface on the volume boundary in step 5002. Note that, if the steps in the flowchart in Figure 5 are done after the steps in the flowchart in Figure 4, step 5002 will be omitted because it has been completed.

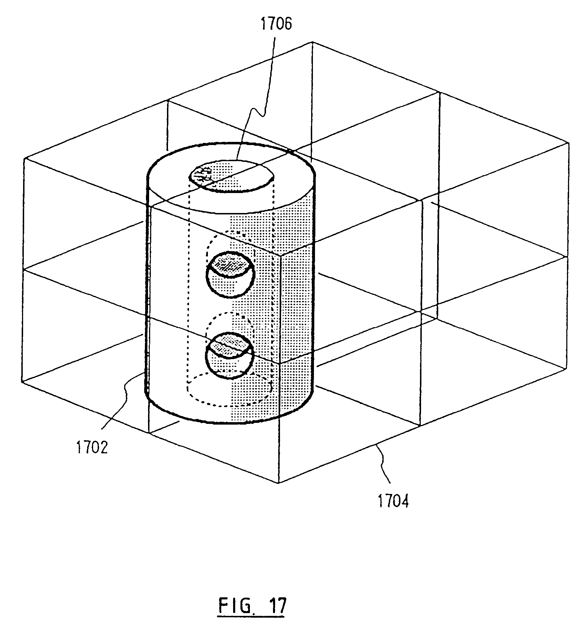

Next, in relation to step 5004, a method of placing a plurality of bubbles in a volume by the volume node location means 212 of Figure 1 will be described in conjunction with Figure 17.

In Figure 17, generally, the volume in which bubbles are placed is not limited to a cube or a rectangular parallel piped. Therefore, a step of placing bubbles on 8 corners of a cube has been prepared in advance, and a cube 1704 covering a volume region 1702 sufficiently is defined. In some cases, the volume region 1702 generally has an opening 1706 or a cavity. The cube 1704 is divided into 8 regions. For each region, it is determined if the most suitable point (i.e., 8 corners of the divided cube) is inside the volume region 1702. If "Yes," a bubble is placed in the most suitable point and, if "No," a bubble is not placed. Such a step is done recursively for each of the 8 regions. The stop condition of the recursive step is that all bubbles placed in the 8 regions contact or intersect each other.

Steps 5006 to 5018 are substantially identical to steps 3006 to 3018 in Figure 3, but it is necessary to note the following:

Bubbles placed optimally on vertexes and edges (or, generically on the boundaries of a volume) by step 5002 (or steps in the flowcharts in Figures 3 and 4) are treated as unmovable in the calculation of an equation of motion for a bubble in a volume. The bubble on the boundaries of volume exerts attractive and repulsive forces, based on the force defined hereinabove, and appears only on the right side of the equation of motion and does not appear in the differential terms on the left side of the equation.

Although, in step 3010 or 4010, the bubble departed from the edge or curved surface as a result of bubble movement has been returned, in step 5010, a bubble moved outside the boundary of the volume is destroyed. The reason is that the bubble has already been placed optimally on the volume boundary by step 5002 (or the steps of the flowchart in Figure 4).

The determination of a stable condition by step 5012 may be made in the same way as that of step 3012 or 4012.

The calculation of the degree of overlap or estrangement of a bubble in step 4041 is slightly different from the case of the curved surface, and the bubble is three-dimensionally adjacent. In this case, 12 bubbles are adjacent to one bubble in the closest state. Therefore, the threshold values of the degree of overlap and estrangement in three dimensions are two times the values in the case of two dimensions.

In step 5016, it is determined whether the bubble is placed appropriately from the degree of overlap and estrangement of that bubble. If "No," the bubble in the overpopulated part is destroyed and the bubble in the depopulated part is divided in step 5018. If a new cycle of the Runge-Kutta method is repeated and it is determined that the bubble is placed appropriately, a mesh node is placed on the bubble in step 5020.

As has been described, an optimum mesh can be formed automatically in accordance with the present invention by applying a bubble placement method based on a dynamic model to a so-called nonmanifold shape data structure in which a one-dimensional line or a two-dimensional curved surface is buried in a three-dimensional figure.

## Claims

1. A method of automatic mesh generation for mesh representation of three dimensional non-manifold data models, comprising the following steps:

    placing nodes at each of the vertices of a non-manifold data model;

    placing nodes on each of the edges of the data model, in accordance with initial node distribution criteria, and dynamically redistributing said nodes according to a dynamic distribution function such that said nodes are moved towards an equilibrium node distribution having substantially optimum node separation;

    responsive to the node distribution reaching a predetermined level of approximation to said equilibrium distribution, connecting the nodes on the edges to form a mesh of line elements;

    placing nodes on all closed faces of said data model, in accordance with initial node distribution criteria, and dynamically redistributing said nodes according to said dynamic distribution function;

    responsive to the node distribution reaching a predetermined level of approximation to said equilibrium distribution, connecting the nodes on the closed faces to divide the data model into triangle elements;

    placing nodes in all closed bodies of said data model, in accordance with initial node distribution criteria, and dynamically redistributing said nodes according to said dynamic distribution function;

    responsive to the node distribution reaching a predetermined level of approximation to said equilibrium distribution, connecting the nodes in the closed bodies to divide the data model into tetrahedron elements.

2. A method according to claim 1, wherein said predetermined level of approximation is determined by the velocity of node movement reaching a predetermined value.

3. A method according to claim 1 or claim 2, wherein each step of placing nodes comprises positioning as said nodes computational model "bubbles" having a predetermined diameter and mass, said initial distribution criteria and said dynamic distribution function being in accordance with a predefined interbubble force related to the distance between said bubbles and Newtonian equations of a dynamic system comprising said bubbles, said redistribution of bubbles being performed in dependence on the coordinate positions of said bubbles and the corresponding velocities determined by the interbubble force.

4. A method according to claim 3, wherein said initial node distribution criteria include the requirement that placed bubbles contact densely or intersect with each other.

5. A method according to claim 3 or claim 4, wherein said Newtonian equations include a term representing a viscosity.

6. A method according to any one of claims 3 to 5, wherein said bubbles have a diameter, d(x, y, z), represented by a function of coordinates (x, y, z) and a fixed mass, m, independent of coordinates.

7. A method according to any one of claims 3 to 6, wherein said interbubble force is defined so that it acts as an attractive force when said distance between said bubbles is above a predetermined distance and as a repulsive force when said distance between said bubbles is below a predetermined distance.

8. A method according to any one of the preceding claims, wherein said steps of dividing the data model into triangle elements and dividing the data model into tetrahedron elements are respectively performed by a two-dimensional Delaunay's method and a three-dimensional Delaunay's method.

9. A method according to claim 8, wherein said step of dividing the data model into triangle elements further includes the step of drawing lines of said triangle elements so that said triangle elements do not intersect with line elements when said line elements are buried in said closed faces.

10. A method according to claim 8 or claim 9, wherein said step of dividing the data model into tetrahedron elements further includes the step of drawing lines of said tetrahedron elements so that said tetrahedron elements do not intersect with surface elements when said surface elements are buried in said closed bodies.

11. A method according to any one of claims 3 to 10, including the step of determining a degree of overlap between said bubbles, and the step of, when it is determined that said degree of overlap is more than a first threshold destroying the bubble whose said degree of overlap is more than said first threshold.

12. A method according to any one of claims 3 to 11, wherein said Newtonian equations are numerically solved by a Runge-Kutta method.

13. A method according to any one of the preceding claims, wherein the step of redistributing said nodes placed on the edges of the data model includes the steps of determining whether said nodes were moved away from said edges and, if moved away, returning back to said edges the nodes that were moved from said edges.

14. A method according to claim 13, wherein the step of redistributing said nodes placed on said closed faces of the data model includes the steps of determining whether said nodes were moved away from said closed faces and, if moved away, returning back onto said closed faces the nodes that were moved from said closed faces.

15. A method according to claim 13, wherein the step of redistributing nodes placed in said closed bodies of the data model includes the step of determining whether said nodes were moved away from said closed bodies and, if moved away, destroying the nodes that were moved from said closed bodies.

16. A method according to any one of the preceding claims, which further includes the step of determining a spacing between said nodes, and the step of, when it is determined that said spacing is more than a second threshold, generating a new node in the vicinity wherein it was determined that said spacing is more than said second threshold.

17. A computerised system for automatic mesh generation for mesh representation of three dimensional non-manifold data models, comprising:
means for placing nodes at each of the vertices of a non-manifold data model;
means for placing nodes on each of the edges of the data model, in accordance with initial node distribution criteria, and for dynamically redistributing said nodes according to a dynamic distribution function such that said nodes are moved towards an equilibrium node distribution having substantially optimum node separation;
means, responsive to the node distribution reaching a predetermined level of approximation to said equilibrium distribution, for connecting the nodes on the edges to form a mesh of line elements;
means for placing nodes on all closed faces of said data model, in accordance with initial node distribution criteria, and for dynamically redistributing said nodes according to said dynamic distribution function;

means, responsive to the node distribution reaching a predetermined level of approximation to said equilibrium distribution, for connecting the nodes on the closed faces to divide the data model into triangle elements;

means for placing nodes in all closed bodies of said data model, in accordance with initial node distribution criteria, and for dynamically redistributing said nodes according to said dynamic distribution function;

means, responsive to the node distribution reaching a predetermined level of approximation to said equilibrium distribution, for connecting the nodes in the closed bodies to divide the data model into tetrahedron elements.

18. A computerized method of automatically generating meshes on a three-dimensional nonmanifold data model, comprising the steps of:

(a) placing a bubble as a computational physical model on each vertex of said three-dimensional nonmanifold data model, said bubble being defined as having a predetermined diameter and mass;

(b) placing bubbles as computational physical models on all edges of said three-dimensional nonmanifold data model so that placed bubbles contact densely or intersect with each other, said bubbles being defined as having a predetermined diameter and mass;

(c) determining coordinates and a velocity of each of said bubbles on said edges by defining an interbubble force related to a distance between said bubbles and by solving, based on the defined interbubble force, Newtonian equations on a dynamic system comprising said bubbles and moving each of said bubbles placed on said edges in accordance with the deter mined coordinates and velocity;

(d) generating line elements by connecting center points of said bubbles placed on said edges in response to bubble movement becoming less than a predetermined value;

(e) placing bubbles as computational physical models on all closed faces of said three-dimensional nonmanifold data model so that placed bubbles contact densely or intersect with each other, said bubbles being defined as having a predetermined diameter and mass;

(f) determining coordinates and a velocity of each of said bubbles placed on said all closed faces by solving said Newtonian equations based on said interbubble force and moving each of said bubbles placed on said closed faces in accordance with the determined coordinates and velocity;

(g) generating triangle elements by connecting center points of said bubbles placed on said closed faces in response to the bubble movement becoming less than a predetermined value;

(h) placing bubbles in all closed bodies of said three-dimensional nonmanifold data model so that placed bubbles contact densely or intersect with each other, said bubbles being defined as having a predetermined diameter and mass;

(i) determining coordinates and a velocity of each of said bubbles placed in said all closed bodies by solving said Newtonian equations based on said interbubble force and moving each of said bubbles in accordance with the determined coordinates and velocity; and

(j) generating tetrahedron elements by connecting center points of said bubbles placed in said closed bodies in response to bubble movement becoming less than a predetermined value.

**1**

Geometry capture block

**2**

Element division block

**3**

Mesh output block

202 — Vertex node location means

204 — Edge node location means

206 — Line element generation means

208 — Surface node generation means

210 — Triangle element generation means

212 — Volume node location means

214 — Tetrahedron element generation means

102 — Nonmanifold geometry definition means

104 — Geometry phase information capture means

Geometry geometric information capture means

302 — Mesh phase information generation means

304 — Mesh geometric information generation means

306 — Mesh phase information capture means

308 — Mesh geometric information capture means

310 — Meshes definition means

**FIG. 1**

14

FIG. 2

START

Place bubbles on edges — 3002

Initial bubble configuration on edges — 3004

Evaluate interbubble force — 3006

Move bubbles by dynamic simulation — 3008

Relocate bubbles on edge and destroy bubbles outside edge — 3010

3012
Stable condition
N

Y

Evaluate of bubble overlap — 3014

3016
Appropriate bubble configuration?
N

3018
Destroy bubbles on denser faces and divide them on sparser faces

Y

Place mesh nodes on a bubble — 3020

END

FIG. 3

FIG. 4

START

Place bubbles on volume boundary — 5002

Initial bubble configuration inside volume — 5004

Evaluate interbubble force — 5006

Move bubbles by dynamic simulation — 5008

Destroy bubbles outside volume boundary — 5010

5012
Stable condition

N

Y

Evaluate bubble overlap — 5014

5016
Appropriate bubble configuration?

N

5018
Destroy bubbles on denser faces and divide them on sparser faces

Y

Place mesh nodes on a bubble center — 5020

END

F I G. 5

(a) Nonmanifold captured

FIG. 6

(b) Vertex node configuration

(c) Edge node configuration

(d) Line element generation

(e) Surface node configuration

(f) Triangle element generation

(g) Volume node configuration and tetrahedron element generation

(h) Mesh

FIG. 7

$$r_0 = \frac{d(x_i, y_i, z_i)}{2} + \frac{d(x_j, y_j, z_j)}{2}$$

Bubble

Bubble

$d(x_j, y_j, z_j)$

$d(x_i, y_i, z_i)$

FIG. 8

$L = (x(s), y(s), z(s))$

$s$

FIG. 9

FIG. 10

A    B

$p_1$    $p_2$    $q_1$    $q_2$

(a)

$t_2 = (x(s_1 + \Delta s), y(s_1 + \Delta s), z(s_1 + \Delta s))$

(b)

$p$

$q$

$t_1 = (x(s_1), y(s_1), z(s_1))$

$D$

$s_1$    $s_1 + \Delta s$

21

FIG. 11

FIG. 12

$$\begin{cases} x = x(u, v) \\ y = y(u, v) \\ z = z(u, v) \end{cases}$$

FIG. 13

FIG. 14

FIG. 15

(a) Initial configuration

(b) At the first step

(c) At the fifth step

(d) At the 50th step

FIG. 16

FIG. 17